# EUROPÄISCHE PATENTSCHRIFT

(11) **EP 1 179 505 B1**
(45) Veröffentlichungstag und Bekanntmachung des Hinweises auf die Patenterteilung: **04.06.2003**
(21) Anmeldenummer: 01250285.2
(22) Anmeldetag: 27.07.2001
(51) Int. Cl.: B67D 5/32, B67D 5/60, B65D 90/50

(54) **Doppelwandiger Behälter mit Lekagedetektionseinrichtung**
Double-walled container with leak detection system
Conteneur à double paroi avec système de détection de fuites

(30) Priorität: 08.08.2000 DE 20013627 U
(43) Veröffentlichungstag der Anmeldung: 13.02.2002
(73) Patentinhaber: Chemie- Und Tankanlagenbau Reuther Gmbh, 15517 Fürstenwalde (DE)
(72) Erfinder: Hudler, Karl Egon, 15517 Fürstenwalde (DE); Brosch, Jürgen, 42329 Wuppertal (DE)
(74) Vertreter: Hannig, Wolf-Dieter, Dipl.-Ing.

(56) Entgegenhaltungen:
- EP-A- 0 758 619
- DE-B- 1 165 946

## Beschreibung

Die Erfindung betrifft eine Vorrichtung zum Lagern von Flüssigkeiten, insbesondere von wassergefährdenden Flüssigkeiten, bestehend aus einem doppelwandigen Behälter mit einem Leckage-Überwachungsraum mit einem am Behältertiefpunkt angeordneten Auslauf aus einer doppelwandigen Rohrleitung mit einem Überwachungsraum und einer ersten an diese endseitig angeschlossenen doppelwandigen, einen Überwachungsraum aufweisenden Absperrarmatur, wodurch der Leckage-Überwachungsraum des Behälters mit dem Überwachungsraum der Absperrarmatur verbunden ist und einer zweiten, mit der ersten Absperrarmatur verbundenen Absperrarmatur, wobei beide Absperrarmaturen die Rohrleitung gleichzeitig öffnen und bei Leckage gleichzeitig schließen.

Eine derartige Vorrichtung ist aus der EP 0 758 619 B1 bekannt. Bei dieser verläuft von der ersten Absperrarmatur eine weiterführende Rohrleitung in abgedichteter Weise durch ein die Absperrarmatur umgebendes Schutzgehäuse hindurch nach außen. Diese zweite Absperrarmatur ist außerhalb des Schutzgehäuses in der weiterführenden Rohrleitung angeordnet. Hierbei ist die erste Absperrarmatur in ihrer Schließstellung vorgespannt und mittels einer Steuervorrichtung entgegen der Vorspannung in die Offenstellung bringbar, wenn die zweite Absperrarmatur geöffnet wird und keine Leckage in dem Überwachungsraum festgestellt worden ist.
Gemäß der allgemeinen bauaufsichtlichen Zulassung des Deutschen Institut für Bautechnik (Z-38.12-28 und Z-38.12-29) vom 27.02.1997 und 17.04.1997 muss der untere Auslauf doppelwandig als Verlängerung des Überwachungsraumes des Behälters ausgeführt und die erste Absperrarmatur unlösbar mit dem unteren Auslauf verbunden sein.
Mit dieser bekannten Vorrichtung werden zwar die bekannten Zulassungsbedingungen wie gleichzeitiges Öffnen und Schließen der beiden Absperrarmaturen, Geschlossenbleiben beider Armaturen bei einem Alarm der Leckerkennungseinrichtung, doppelwandige Ausführung des unteren Auslaufs bis zur ersten Armatur erfüllt, jedoch erfordert diese Vorrichtung neben den notwendigen Lecküberwachungs- und Anzeigegeräten einen beträchtlichen zusätzlichen Steuerungsaufwand für die vom Öffnungszustand der zweiten Armatur abhängige Ansteuerung der ersten Absperrarmatur. Zudem ist es erforderlich, die Dichtheit der einwandigen, weiterführenden Rohrleitung mit den angeschlossenen weiteren Absperrarmaturen regelmäßig, spätestens innerhalb eines Jahres, mit einem angeschlossenen Manometer zu prüfen. Hierdurch entsteht ein erhöhter Wartungsaufwand.
Ein weiterer wesentlicher Nachteil dieser bekannten Einrichtung besteht darin, dass die erste Absperrarmatur von außen unzugänglich im Schutzgehäuse vollständig gekapselt angeordnet ist, so dass bei Wartungsarbeiten das Schutzgehäuse geöffnet werden muss. Hierzu besitzt das Schutzgehäuse einen fluiddicht verschraubten Deckel, der eine lösbare Verbindung am unteren Auslauf darstellt. Die Deckelverschraubung stellt somit eine nicht leckageüberwachte Verbindung dar, so dass die Gefahr des unkontrollierten Austretens von wassergefährdenden Flüssigkeiten nicht hinreichend sicher ausgeschlossen werden kann.

Bei diesem Stand der Technik liegt der Erfindung die Aufgabe zugrunde, die Sicherheit gegen unkontrolliertes Austreten wassergefährdender Flüssigkeiten am unteren Auslauf von Behältern bei gleichzeitiger Reduzierung des Steuerungs- und Anlagenaufwandes sowie der Wartungskosten zu erhöhen.

Diese Aufgabe wird erfindungsgemäß dadurch gelöst, dass die zweite Absperrarmatur eine doppelwandige Absperrarmatur mit einem inneren Überwachungsraum ist, so dass der Überwachungsraum des Behälters mit dem Überwachungsraum der zweiten Absperrarmatur verbunden ist und mit dem Überwachungsraum der Rohrleitung, dem Überwachungsraum der ersten Absperrarmatur einen gemeinsamen durchgängigen Überwachungsraum bilden.
Die Erfindung basiert auf der Erkenntnis, dass ein gleichzeitiges versagen beider Absperrarmaturen und der inneren bzw. äußeren Wandung des Behälters und der doppelwandigen Rohrleitung des Auslaufs ausgeschlossen werden kann. Überwacht wird der gemeinsame Überwachungsraum zweckmäßigerweise mit einem Druck-Leckanzeigegerät, das bei einer Leckage ein Signal an die entsprechende Meldeeinrichtung weitergibt. Zudem kann über ein im überwachbaren Anschlussflansch der zweiten Absperrarmatur angebrachtes Prüfventil der Prüfdruck des Überwachungsraumes geprüft werden.
Durch die doppelwandige Verbindung zwischen der ersten, zweiten Absperrarmatur und den dazugehörigen Flanschverbindungen ist der gesamte Überwachungsraum bis zu einem Abstand von ca. 2,5 m in die Leckageüberwachung des Behälters einbezogen. Da als Überwachungsräume unmittelbar miteinander verbunden sind, kann der Überwachungsraum der zweiten Absperrarmatur einschließlich der zugehörigen doppelwandigen Rohrleitung als Verlängerung des Überwachungsraumes des Behälters betrachtet werden. Im Falle des Versagens der ersten Absperrarmatur wird der untere Auslauf über die zweite Absperrarmatur geschlossen. Ein gleichzeitiger Ausfall der beiden Absperrarmaturen und der inneren oder äußeren Rohrleitung zwischen den Ventilen ist ausschließbar.

Mit der erfindungsgemäßen Vorrichtung wird es möglich, die Sicherheit der Abdichtung des unteren Auslaufs weiter zu erhöhen und die Wartungsfreundlichkeit bei einfacherer Ausführung der Steuerung erheblich zu verbessern. So sind beispielsweise Wartungsarbeiten an den Armaturen direkt möglich, ohne dass Schutzgehäuse zusätzlich geöffnet oder geschlossen werden müssen.
Vorteilhafte Ausführungen der Erfindung sind den Unteransprüchen entnehmbar.

Anhand des in der beiliegenden Zeichnung dargestellten Ausführungsbeispieles wird die Erfindung näher erläutert.

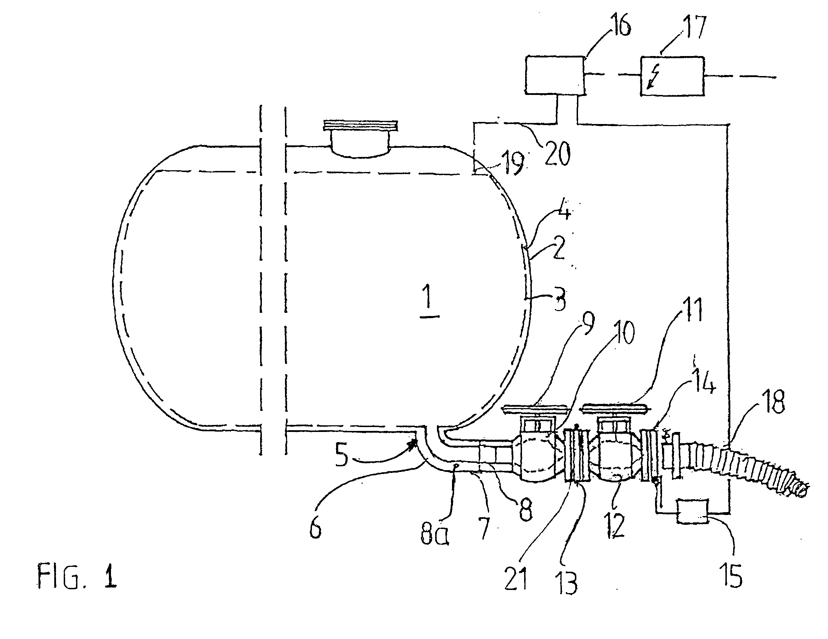

Die Fig. 1 zeigt den prinzipiellen Aufbau der erfindungsgemäßen Vorrichtung.

Die in Fig. 1 gezeigte Vorrichtung gemäß der Erfindung besteht im wesentlichen aus einem doppelwandigen Behälter 1. Zwischen beiden Wandungen **2** und **3** des Behälters **1** ist ein Leckage-Überwachungsraum **4** ausgebildet. Der Behälter **1** besitzt an seinem Tiefpunkt einen Auslauf **5**, der aus einer doppelwandigen Rohrleitung **6** gebildet ist, zwischen deren Wandungen **7** und **8** ein Überwachungsraum **8a** vorhanden ist. Der Auslauf **5** ist mit dem Behälter **1** unlösbar durch eine Schweißung verbunden. An ihrem behälterfernen Ende ist an die Rohrleitung **6** eine erste Absperrarmatur **9** angeschlossen, die doppelwandig hergestellt ist und einen inneren Überwachungsraum **10** einschließt. An die erste Absperrarmatur **9** ist unmittelbar eine zweite Absperrarmatur **11** über ein ebenfalls doppelwandiges Verbindungselement **13** mit Überwachungsraum **21** (Flansch oder Rohrleitung) angeschlossen. Die Absperrarmatur **11** ist doppelwandig und weist einen inneren Überwachungsraum **12** auf. Die Überwachungsräume des Behälters **1**, der Rohrleitung **6** und der Absperrarmaturen **9** und **11** sind so miteinander verbunden, dass ein gemeinsam durchgehender Überwachungsraum entsteht. Die beiden Absperrarmaturen **9** und **11** sind über Stellglieder derart verstellbar, dass sie gleichzeitig öffnen und bei einer Leckagemeldung im gemeinsamen Überwachungsraum gleichzeitig schließen. Der gemeinsame Überwachungsraum wird mit Druck oder Vakuum überwacht, so dass bei einer Leckage sowohl an der Innenwand als auch an der Außenwand des Überwachungsraumes durch den Druckunterschied im Überwachungsraum die Leckagemeldung erfolgt, worauf sofort beide Absperrarmaturen schließen. Außerdem wird durch ein potentialfreies Relais in der Meldeeinrichtung die Leckage angezeigt und zur für diesen Fall verantwortlichen Stelle weitergeleitet. Die Absperrarmaturen **9** und **11** werden mittels ihrer Stellglieder elektrisch oder pneumatisch geöffnet und geschlossen. Bei einem Ausfall der Hilfsenergien schließen sich beide Absperrarmaturen **9** und **11** gleichzeitig automatisch. Die beiden Absperrarmaturen **9** und **11** sind beispielhaft als Faltenbalgventile inklusive zugehöriger Flanschdichtungen ausgebildet, wie sie in dem europäischen Patent EP 0 892 901 B1 beschrieben sind und insofern wird in vollem Umfang auf diese Patentschrift Bezug genommen. Zwischen den beiden Absperrarmaturen **9** und **11** befindet sich ein doppelwandiger Flansch **13** mit eingebautem Absperrventil, so dass bei einer Leckage mit Hilfe des Absperrventiles die Leckage getrennt geortet werden kann, und zwar, ob sie vor oder hinter dem Absperrventil vorhanden ist. Hinter der zweiten Absperrarmatur **11** befindet sich ein Übergangsflansch **14** mit Anschluss an ein nicht dargestelltes Prüfventil oder, wie dargestellt, mit einem Anschluss über eine Flüssigkeitssperre **15** an ein Vakuum-Anzeigegerät **16**. Dieses ist mit einer Meldeeinrichtung **17** verbunden. An den Übergangsflansch **14** kann direkt eine doppelwandige starre oder flexible Rohrleitung **18** angeschlossen werden. Der Überwachungsraum wird von dem Vakuum-Leckanzeigegerät **16** über einen im Überwachungsraum des Behälters angeordneten Messfühler über eine Messleitung **20** überwacht.

Aufstellung der verwendeten Bezugszeichen

| Hierzu 1 Blatt Zeichnung | |
|---|---|
| Behälter | 1 |
| Wandungen von 1 | 2, 3 |
| Leckage-Überwachungsraum von 1 | 4 |
| Auslauf | 5 |
| Doppelwandige Rohrleitung | 6 |
| Wandungen von 6 | 7, 8 |
| Überwachungsraum von 6 | 8a |
| erste Absperrarmatur | 9 |
| innerer Überwachungsraum von 9 | 10 |
| zweite Absperrarmatur | 11 |
| innerer Überwachungsraum von 11 | 12 |
| doppelwandiges Verbindungselement (Flansch,Rohrleitung) | 13 |
| Übergangsflansch | 14 |
| Flüssigkeitssperre | 15 |
| Vakuum-Leckanzeigegerät | 16 |
| Meldeeinrichtung | 17 |
| Starre oder flexible Rohrleitung | 18 |
| Messfühler | 19 |
| Messleitung | 20 |
| Überwachungsraum von 13 | 21 |

## Patentansprüche

1. Vorrichtung zum Lagern von Flüssigkeiten, insbesondere von wassergefährdenden Flüssigkeiten, bestehend aus einem doppelwandigen Behälter **(1)** mit einem Leckage-Überwachungsraum **(4)** mit einem am Behältertiefpunkt angeordneten Auslauf **(5)** aus einer doppelwandigen Rohrleitung (6) mit einem Überwachungsraum **(8a)** und einer ersten an diese endseitig angeschlossenen doppelwandigen, einen Überwachungsraum **(10)** aufweisenden Absperrarmatur **(9)**, wodurch der Leckage-Überwachungsraum **(4)** des Behälters **(1)** mit dem Überwachungsraum **(10)** der Absperrarmatur **(9)** verbunden ist und einer zweiten, mit der ersten Absperrarmatur **(9)** verbundenen Absperrarmatur **(11)**, wobei beide Absperrarmaturen **(9,11)** die Rohrleitung gleichzeitig öffnen und bei Leckage gleichzeitig schließen, **dadurch gekennzeichnet, dass** die zweite Absperrarmatur **(11)** eine doppelwandige Absperrarmatur mit einem inneren Überwachungsraum **(12)** ist, die mit einem doppelwandigen, einen Überwachungsraum **(21)** aufweisenden Verbindungselement **(13)** an der ersten Absperrarmatur angeschlossen ist, so dass der Überwachungsraum **(4)** des Behälters **(1)** mit dem Überwachungsraum **(12)** der zweiten Absperrarmatur **(11)** in Verbindung steht und alle Überwachungsräume **(4, 8a, 10, 21)** einen gemeinsamen durchgängigen Überwachungsraum bilden.

2. Vorrichtung nach Anspruch 1, **dadurch gekennzeichnet, dass** das Verbindungselement **(13)** zwischen erster Absperrarmatur **(9)** und zweiter Absperrarmatur **(11)** eine doppelwandige Rohrleitung ist.

3. Vorrichtung nach Anspruch 1, **dadurch gekennzeichnet, dass** das Verbindungselement **(13)** zwischen den beiden Absperrarmaturen **(9,11)** ein doppelwandiger Flansch mit eingebautem Absperrventil angeordnet ist.

4. Vorrichtung nach Anspruch 3, **dadurch gekennzeichnet, dass** in den beiden Absperrarmaturen **(9,11)** der doppelwandige Flansch angeordnet ist.

5. Vorrichtung nach Anspruch 1 bis 4, **dadurch gekennzeichnet, dass** strömungsseitig hinter der zweiten Absperrarmatur **(11)** ein Übergangsflansch **(14)** angeordnet ist, der vorzugsweise einen Anschluss für ein Prüfventil oder eine Flüssigkeitssperre **(15)** aufweist.

6. Vorrichtung nach Anspruch 5, **dadurch gekennzeichnet, dass** die Flüssigkeitssperre **(15)** an ein Vakuum-Anzeigegerät **(16)** angeschlossen ist.

7. Vorrichtung nach Anspruch 1 bis 6, **dadurch gekennzeichnet, dass** an den Übergangsflansch **(14)** eine doppelwandige starre oder flexible Rohrleitung **(18)** angeschlossen ist.

8. Vorrichtung nach Anspruch 1 bis 7, **dadurch** gekennzeichne t, dass die Stellantriebe der Absperrarmaturen **(9,11)** pneumatisch oder elektrisch angetrieben sind und bei Ausfall der Antriebsenergie selbsttätig schließen.

9. Vorrichtung nach Anspruch 1 bis 8, **dadurch gekennzeichnet, dass** der gemeinsame Überwachungsraum vakuum- oder überdruckmäßig auf Leckage überwacht ist.

## Claims

1. Device for storing liquids especially liquids endangered for water, comprising a double-walled container **(1)** with a leak-control room **(4)** having an outlet **(5) l**ike a double-walled pipe **(6)** with a control room **(8a)** at the deepest point of the container, and a first double-walled shutt-off armature **(9)** with control room **(10)** connected to the end site of said pipe whereby the leackage-control-room (4) of the container (1) is connected to the control-room (10) of the shutt-off armature (9), and a second shutt-off armature (11) connected to the first shutt-off armature (9), whereby both shutt-off armatures (9,11) are opened or closed the pipe in the same time, **characterized in that** the second shutt-off armature **(11)** is a double-walled shutt-off armature with an inner control room **(12)**, which double-walled shutt-off armature is connected to the first shutt-off armature by a double-walled connecting element **(13)** having a control room **(21)** so that the control room **(4)** of the container **(1)** is in connection with the control room **(12)** of the second shutt-off armature **(11)** and all control rooms **(4,8a,10,21)** form a united continuous control room.

2. Device according to claim 1, **characterized in that** the connecting element **(13)** between first shutt-off armature **(9)** and second shutt-off armature **(11)** is a double-walled pipe.

3. Device according to claim 1, chararcterized in that the connecting element **(13)** between the both shutt-off armatures **(9,11)** is a double-walled flange with an inserted shutt-off valve.

4. Device according to claims 3, **characterized in that** the double-walled flange is arranged in the both shutt-off armatures **(9,11)**.

5. Device according to claims 1 to 4, **characterized in that** a transition flange **(14)** is arranged behind the second shutt-off armature **(11)** in direction of flow, which said flange shows preferably a connector for a test valve or liquid prevention device **(15)**.

6. Device according to claim 5, **characterized in that** the liquid prevention device **(15)** is connected to a vacuum indicating instrument.

7. Device according to claim 1 to 6, **characterized in that** a double-walled rigid or flexible pipe **(18)** is connected to the transition flange **(14)**.

8. Device according to claim 1 to 7, **characterized in that** the actuating drive of the shutt-off armatures **(9,11)** are pneumatically or electrically drived and closed automatically at breakdown of the driving energy.

9. Device to claims 1 to 8, **characterized in that** the united control room is leak-controlled by means of vacuum and pressure.

## Revendications

1. Dispositif de stockage de liquides, en particulier de liquides mettant en danger l'eau, se composant d'un récipient à double paroi **(1)** avec un espace de surveillance de fuite **(4)** avec une sortie **(5)** disposée sur le point le plus bas du récipient et formée d'une conduite **(6)** à double paroi avec un espace de surveillance **(8a)** et avec une première robinetterie d'arrêt **(9)** à double paroi qui est connectée à l'extrémité de ladite conduite et qui présente un espace de surveillance **(10)**, ce par quoi l'espace de surveillance de fuite **(4)** du récipient **(1)** est relié à l'espace de surveillance **(10)** de la robinetterie d'arrêt **(9)**, et avec une deuxième robinetterie d'arrêt **(11)** reliée à la première robinetterie d'arrêt **(9)**, les deux robinetteries d'arrêt **(9, 11)** ouvrant la conduite simultanément et la fermant simultanément en cas de fuite, **caractérisé par le fait que** la deuxième robinetterie d'arrêt **(11)** est une robinetterie d'arrêt à double paroi avec un espace intérieur de surveillance **(12)**, qui, avec un élément de liaison **(13)** à double paroi présentant un espace de surveillance **(21)**, est connectée à la première robinetterie d'arrêt, de sorte que l'espace de surveillance **(4)** du récipient **(1)** est en communication avec l'espace de surveillance **(12)** de la deuxième robinetterie d'arrêt **(11)** et que tous les espaces de surveillance **(4, 8a, 10, 21)** forment un espace commun continu de surveillance.

2. Dispositif selon la revendication 1, **caractérisé par le fait que** l'élément de liaison **(13)** entre la première robinetterie d'arrêt **(9)** et la deuxième robinetterie d'arrêt **(11)** est une conduite à double paroi.

3. Dispositif selon la revendication 1, **caractérisé par le fait que** l'élément de liaison **(13)** entre les deux robinetteries d'arrêt **(9, 11)** est une bride à double paroi avec une soupape d'arrêt intégrée.

4. Dispositif selon la revendication 3, **caractérisé par le fait que** la bride à double paroi est disposée dans les deux robinetteries d'arrêt **(9, 11)**.

5. Dispositif selon la revendication 1 à 4, **caractérisé par le fait qu'**une bride de transition **(14)** est disposée dans le sens du courant derrière la deuxième robinetterie d'arrêt **(11)**, ladite bride de transition présentant de préférence un raccord pour une soupape de contrôle ou un registre d'arrêt de liquide **(15)**.

6. Dispositif selon la revendication 5, **caractérisé par le fait que** le registre d'arrêt de liquide **(15)** est connecté à un appareil indicateur de vide **(16)**.

7. Dispositif selon la revendication 1 à 6, **caractérisé par le fait qu'**une conduite (18) rigide ou flexible à double paroi est connectée à la bride de transition **(14)**.

8. Dispositif selon la revendication 1 à 7, **caractérisé par le fait que** les vérins des robinetteries d'arrêt (9, 11) sont entraînés de manière pneumatique ou électrique et ferment automatiquement en cas d'absence de l'énergie d'entraînement.

9. Dispositif selon la revendication 1 à 8, **caractérise par le fait que** l'espace commun de surveillance est surveillé en vue de fuites de vide ou de surpression.
